Europäisches Patentamt

European Patent Office

Office européen des brevets

(11) Publication number: **0 035 909**
**B1**

(12) **EUROPEAN PATENT SPECIFICATION**

(45) Date of publication of patent specification: **11.03.87**

(21) Application number: **81300989.1**

(22) Date of filing: **10.03.81**

(51) Int. Cl.⁴: **B 64 D 13/08,** B 60 H 1/32

(54) Air conditioning system.

(30) Priority: **11.03.80 US 129545**

(43) Date of publication of application:
**16.09.81 Bulletin 81/37**

(45) Publication of the grant of the patent:
**11.03.87 Bulletin 87/11**

(84) Designated Contracting States:
**DE FR GB SE**

(56) References cited:
**FR-A-1 026 985**
**FR-A-1 042 686**
**GB-A- 904 252**
**GB-A-2 015 723**
**GB-A-2 026 152**
**US-A-2 586 002**

(73) Proprietor: **THE GARRETT CORPORATION**
**9851-9951 Sepulveda Boulevard P.O. Box 92248**
**Los Angeles, California 90009 (US)**

(72) Inventor: **Payne, George K.**
**2810, San Ramon**
**Rancho Palos Verdes California 90274 (US)**

(74) Representative: **Arthur, George Fitzgerald et al**
**KILBURN & STRODE 30, John Street**
**London WC1N 2DD (GB)**

Courier Press, Leamington Spa, England.

## Description

This invention relates to air conditioning systems for example for use with refrigeration apparatus employed in air conditioning systems for the cabins of aircraft.

In one proposed system, air for the occupants of an aircraft cabin is extracted from the ambient atmosphere, compressed by the engine of the aircraft, cooled by heat exchange with ambient ram air, cooled further by adiabatic expansion in an expansion turbine tempered by addition of warm bypass air if necessary, and then admitted to the cabin air induction and distribution system.

The ambient air contains entrained moisture in vapour, mist or droplet form, which may freeze at some point in the system.

In Schelp's U.S. Specification No. 2,730,874, corresponding to the precharacterising part of claim 1, an expansion evaporation vacuum air conditioning system uses working fluid at ambient atmospheric pressure in which the cooling effect obtained in expanding air through an expansion turbine is utilised. The pressure within the system is below atmospheric pressure, and it is necessary to provide a motor driven fan or the equivalent for driving the air through the system.

The conditioning fluid is fresh air as described in column 5 lines 2 and 3 and this limits the lowest temperature obtainable by the conditioning air to the temperature at which the conditioning air reaches its dew point. If the humidity is high there will be little cooling effect as described in column 5 lines 6 to 10. A recirculation duct circulates a portion of the air from the cabin through a heat exchanger in the conditioning air duct to provide cooling when the fresh air is either too hot or too humid. Then recirculated cabin air cools the fresh air before the combined recirculation cabin air and fresh air reaches the heat exchanger.

In accordance with the present invention indicated in claim 1, the air conditioning system uses a pressurised air source for conditioning air. Exhaust air from the cabin is circulated through the secondary of a heat exchanger in the air duct to cool the pressurised air so that the resulting conditioned air can reach a state such that when depressurised the conditioned air can be at a sub-freezing temperature. Then a recirculation duct is used to mix cabin air with the conditioned air which may include frozen moisture at a point in the system where the pressurised conditioned air is de-pressurised. In this way conditioned air is available for the cabin at approximately 35°F with no entrained frozen moisture.

It is true that Rannenberg's GB Specification No. 2,015,723 teaches a system using bleed air in which a re-circulation duct from the cabin supplies fluid to the air duct downstream of an expansion turbine, but Rannenberg is a system having a single exit for recirculation air from the cabin.

By using a turbine or other depressurising means downstream of the heat exchanger complete refrigeration is accomplished with a single piece of rotating machinery, and a single heat exchanger. The heat exchanger may have an additional secondary connected to a source of ram air for additional cooling.

The recirculation duct provides warm air from the space to prevent air forming downstream of the conditioning unit means.

The efficiency of the system is good if the turbine air outlet temperature is near to, or even below the freezing point of water.

As much as possible of the entrained moisture in the air is removed in the air conditioning system by means of coalescers, water separators, water traps and the like. One hundred per cent removal is not possible and that is why in the prior system described above, air is fed to the cabin distribution ducts at a temperature above the freezing point of water in order to minimize icing; warm bypass air is used to limit the duct air temperature to about 35°—37°F.

The efficiency of the system is high if the turbine expands air down to temperatures below the freezing point of water, but that requires a lot of hot bypass air and performance is degraded. If the amount of hot bypass air (required to temper the turbine exhaust air) is held at a bare minimum, then the expanded air has to be at a temperature above freezing of the entrained water vapour, mist, or droplets, and the turbine and associated components do not operate efficiently.

There may be a pump, possibly driven by the turbine, for air in the cabin air recirculating path and/or in the heat exchanger secondary.

In aircraft use it is desirable to provide maximum possible cooling capacity with the lowest possible engine bleed air flow, while providing adequate removal of the moisture from the fresh air supply and adequate ventilation for the occupants of the conditioned air space.

The invention may be carried into practice in various ways, and one embodiment and certain modifications will now be described by way of example with reference to the accompanying drawings; in which

FIGURE 1 is a diagram of an air conditioning system for an aircraft cabin; and

FIGURES 2, 3 and 4 are diagrams showing modifications.

The invention will be described with reference to the supply of conditioned air to the crew and passenger compartments of an aircraft, but can of course be applied to other uses.

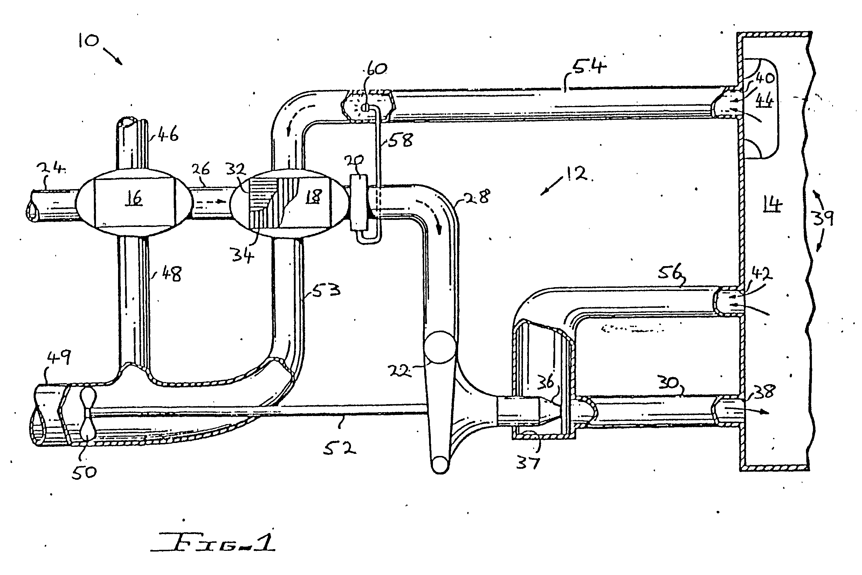

FIGURE 1 shows an air cycle refrigeration system 10 with a duct 12 providing a flow path for elastic fluid (air) from a pressurised source to an enclosed space 14 which is to be provided with a continuous flow of refrigerated air at a pressure substantially less than that of the source. In practice, the source of the pressurised air on board an aircraft would be either the compressor sections of the aircraft's jet propulsion engines or an auxiliary power unit for use when the aircraft is on the ground with the main engines not running.

The flow path includes the primary passageways or first and second heat exchangers 18 and 16, a water trap 20, and an air expansion turbine or other like energy extraction means 22, and ducts 24, 26, 28 and 30.

The heat exchangers 16 and 18 are of the plate-fin configuration in which the primary and secondary passageways are disposed in crossflow heat exchange relationship. Although not shown in the drawing, in the preferred embodiment, the heat exchangers 16 and 18 are in single unit with the primaries being extensions one of the other and with the secondaries being separated from each other by a single common wall. This eliminates the duct 26.

The outlet of the primary 32 of the heat exchanger 18 communicates through the water trap 20 and the duct 28 with the intake of the expansion turbine 22 whose discharge leads to a jet pump nozzle 36 disposed in a muff 37 at the discharge from the turbine 22. The turbine discharge air from the nozzle 36 flows through the duct 30 and an inlet port 38 of the compartment 14. Cabin air outlet means 39 of the compartment 14 comprise outlet ports 40 and 42 with the usual cabin pressure regulator outflow and safety valve 44 disposed to control the cabin air exhaust through the port 40.

The secondary of the heat exchanger 16 is fed from a ram air inlet duct 46, and leads to a ram air exchaust duct 48 which merges with an overboard discharge duct 49. Ram air flow is assisted by an air pump 50 in the duct 49, and driven by a shaft 52 coupled to receive power from the turbine 22. Merging also with the overboard duct 49 is a discharge duct 53 fed from the secondary 34 of the heat exchanger 18, whose inlet is fed by way of a duct 54 from the cabin port 40 to provide regenerative heat exchange between cabin exhaust air and the supply air in the primary 32.

A recirculation duct 56 is disposed between the cabin outlet port 42 and the inlet to the muff 37 so that recirculated cabin air is pumped through the duct 56 by the jet pump nozzle 36 to mix with and warm the discharge air from the turbine 22. To enhance the effectiveness of the heat exchanger 18, water collected by the trap 20 is conveyed by a conduit 58 to a discharge spray nozzle 60 disposed in the duct 54 immediately upstream of the inlet to the secondary 34.

Operation is as follows. Hot compressed air provided by an auxiliary power unit or by bleed from the gas turbine engines is conveyed by the duct 24 to the primary of the heat exchanger 16 where it is cooled to about the temperature of the ambient ram air flowing through the secondary. The partially cooled supply air then flows through the primary 32 of the heat exchanger 18 where it is further cooled to about the temperature of the cabin air by heat exchange with cabin air flowing through the secondary 34. The heat of vaporisation of the water emitted by the nozzle 60 enhances the cooling effect of the cabin exhaust air admitted to the secondary 34.

Because of the high pressure and moderate temperature of the bleed air in the primary 32, the bleed supply air is usually cooled below its dew point, and a substantial portion of the entrained moisture condenses from the supply air in the form of mist or droplets, which are collected in the water trap 20. From the trap the cooled bleed supply air traverses the duct 28 to the intake of the turbine 22 where it is expanded substantially adiabatically and thereby cooled for discharge into the cabin air supply duct 30. The air at this point contains free moisture not removed by the trap 20, and is at temperature well below freezing point. To prevent the accumulation of ice in the supply ducting, warm air must be added to bring the temperature above freezing point.

In the proposed system described above, such warm air has been supplied via a bypass duct from a source of hot compressed air (for example the source connected to the supply duct 24). In the present invention, all (or substantially all) of the warming of the turbine discharge air is performed by recirculation of cabin air. In the case of Figure 1, the recirculated air is pumped by the jet pump nozzle 36 from the cabin 14 through the duct 56 to mix with the cold discharge air from the turbine 22 and thereafter flows through the supply duct 30, so that little, or no hot compressed air is required from the source connected to the duct 24.

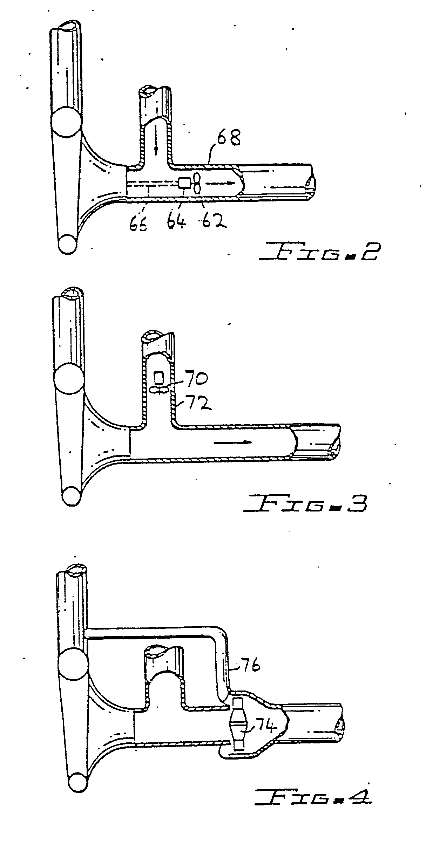

Figures 2, 3 and 4 illustrate alternatives to the jet pump 36 to driving the recirculation flow. In Figure 2, a fan 62 driven either by a motor 64 or an output shaft 66 of the turbine, provides full flow in the duct 68. In Figure 3, a motorised fan 70 is mounted in the recirculation duct 72 corresponding to the duct 56. The fan 70 could be driven from the turbine. Figure 4 shows schematically a turbine fan arrangement 74 in which the single wheel combines turbine blades around the periphery of the fanblades. A conduit 76 delivers a small bleed of air from the duct means upstream from the expansion turbine. The inner fanblades function in full flow mode for the turbine discharge air, recirculating air and the turbine blade discharge.

In summary, it will be remembered that the lowest temperature which can be supplied to a conditioned-air-distribution system is a little in excess of 32 degrees F in order to avoid ice accumulation in the ducting which could obstruct airflow. The required fresh air supply to achieve a given cooling capacity is equal to the cooling load divided by the temperature rise from the compartment inlet to the compartment outlet. This temperature differential is normally about 40°F assuming a 35°F supply temperature (the effective temperature or "dry air rated" temperature will be lower when free moisture is present) and a 75°F cabin temperature.

While it is possible for most air cycle systems to deliver at the turbine discharge air at a temperature well below freezing point the previously proposed means of protecting the distribution system against icing involves bypassing hot, high pressure air from the air source to a mixing muff directly at the turbine discharge. This bypass air, being at a temperature higher than the desired temperature of the compartment to be cooled, causes a reduction in the cooling potential. The maximum cooling capability is then limited to that which occurs with no bypass air and with a discharge temperature above freezing point. This condition fixes the flow capacity of the system.

With the present invention, the protection against ice is handled by recirculation air from the compartment to be cooled. This air, being at the temperature of the compartment, has no influence on the cooling capability of the cold air supplied by the expansion turbine, but can be used to increase the compartment supply air temperature to a value above freezing point. Without any restriction then, on the turbine discharge temperature, all possible means can be used to reduce this temperature.

The recirculation method of providing ice protection also provides a desirable increase in the ventilation rate within the compartment. The condensation and removal of water at the turbine inlet provides all the moisture reduction necessary for the comfort of the occupants of the compartment. The use of a conventional mechanical low pressure separator is not necessary. The complete refrigeration task can be accomplished by a single heat exchanger assembly and a single piece of rotating machinery.

**Claims**

1. An air conditioning system for a substantially enclosed space (14) having an inlet (38) and an outlet (40), comprising a source (24), of conditioning fluid (24), an air duct (26, 28, 30) for supply of air from the source to the inlet (38), and fluid conditioning unit means disposed in said flowpath and adapted to change the energy state of the fluid from that of the fluid at the source to that usable in the enclosed space, said fluid conditioning unit means comprising a first heat exchanger (18) having a primary (32) in the air duct and a secondary (34), and an exhaust duct (54) leading from the outlet (40) to the secondary (34) of the first heat exchanger (18) and thence to ambient for cooling the fluid in the heat exchanger primary (32), characterised in that a recirculation duct (56) leads from another outlet (42) from the space (14) to the air duct downstream of the conditioning means, that the fluid conditioning unit also comprises an expansion turbine (22) or other depressurising means in the air duct downstream of the primary of the heat exchanger (18) and that the source (24) is a source of pressurised conditioning fluid.

2. An air conditioning system as claimed in claim 1 including a second heat exchanger (16) with a primary in the air duct and a secondary connected to a source (46) of ram air.

3. An air conditioning system as claimed in either of the preceding claims including a water trap (20) downstream of the heat exchanger primary (32), and leading to a discharge nozzle (60) in the exhaust duct (54).

4. An air conditioning system as claimed in claim 3 in which the turbine is arranged to operate to expand air from the primary (32) of the first heat exchanger (18) substantially adiabatically from a pressure substantially that of the source (24) of air to a pressure substantially that of the enclosed space (14).

5. A system as claimed in claim 3 or claim 4, in which the turbine (22) is arranged to operate to expand the air to a sub-freezing temperature.

6. An aircraft having a cabin provided with an air conditioning system as claimed in any preceding claim.

**Patentansprüche**

1. Luftkonditioniersystem für einen im wesentlichen geschlossenen Raum (14) mit einem Einlaß (38) und einem Auslaß (40), mit einer Konditionierfluidquelle (24), einer Luftleitung (26, 28, 30) zum Einspeisen von Luft aus der Quelle in den Einlaß (38), und einer Fluidkonditioniervorrichtung, die im Durchflußpfad angeordnet ist und die den Energiezustand des Fluids von dem Zustand an der Quelle in den Zustand ändert, der in dem geschlossenen Raum verwendbar ist, wobei die Fluidkonditioniervorrichtung einen ersten Wärmetauscher (18) mit einem Primärabschnitt (32) in der Luftleitung und einen Sekundärabschnitt (34) besitzt, und wobei eine Ausströmleitung (54) von dem Auslaß (40) zum Sekundärabschnitt (34) des ersten Wärmetauschers (18) und von dort in die Umgebung zur Kühlung des Fluids im Primärabschnitt (32) des Wärmetauschers gefürt ist, dadurch gekennzeichnet, daß eine Rezirkulationsleitung (56) von einem anderen Auslaß (42) des Raumes (14) in den Luftstrom stromabwärts in Bezug auf die Konditioniervorrichtung führt, daß die Fluidkonditioniervorrichtung ferner eine Expansionsturbine (22) oder eine andere Druckverringerungsvorrichtung in der Luftleitung stromabwärts in Bezug auf den Primärabschnitt des Wärmetauschers (18) aufweist, und daß die Quelle (24) eine Quelle druckaufgeladenen Konditionierfluids ist.

2. Luftkonditioniersystem nach Anspruch 1, mit einem zweiten Wärmetauscher (16) mit einem Primärabschnitt in der Luftleitung und einem Sekundärabschnitt, der an eine Stauluftquelle (46) angeschlossen ist.

3. Luftkonditioniersystem nach einem der vorausgehenden Ansprüche, mit einem Wasserabscheider (20), der stromabwärts in Bezug auf den Primärabschnitt (32) des Wärmetauschers angeordnet ist, und der in eine Auslaßdüse (60) in der Ausströmleitung (54) führt.

4. Luftkonditioniersystem nach Anspruch 3, bei dem die Turbine so ausgelegt ist, daß sie Luft von dem Primärabschnitt (32) des ersten Wärmetauschers (18) weitgehend adiabatisch von einem im wesentlichen dem Druck der Quelle (24) entsprechenden Druck auf einen im wesentlichen dem des geschlossenen Raumes (14) entsprechenden Druck expandiert.

5. System nach Anspruch 3 oder 4, bei dem die Turbine (22) so ausgelegt ist, daß sie die Luft auf eine Temperatur unter dem Gefrierpunkt expandiert.

6. Flugzeug mit einer Kabine mit einem Luftkonditioniersystem nach einem der vorausgehenden Ansprüche.

**Revendications**

1. Système de conditionnement d'air pour un espace sensiblement clos (14) comportant une entrée (38) et une sortie (40), comprenant une source (24) de fluide de conditionnement, un conduit d'air (26, 28, 30) pour l'amenée d'air de la source à l'entrée (38), et une unité de conditionnement de fluide disposée dans ce conduit et prévue pour changer l'état d'énergie du fluide de celui du fluide à la source à celui qui est utilisable dans l'espace clos, ladite unité de conditionnement de fluide comprenant un premier échangeur de chaleur (18), qui comporte un primaire (32) dans le conduit d'air et un secondaire (34), et un conduit d'évacuation (54) qui va de la sortie (40) au secondaire (34) du premier échangeur de chaleur (18) et de là à l'ambiance, pour refroidir le fluide du primaire (32) de l'échangeur de chaleur, caractérisé en ce qu'un conduit de recyclage (56) va d'une autre sortie (42) de l'espace (14) au conduit d'air à l'aval des moyens de conditionnement, en ce que l'unité de conditionnement de fluide comprend également une turbine de détente (22) ou un autre moyen de détente dans le conduit d'air à l'aval du primaire de l'échangeur de chaleur (18), et en ce que la source (24) est une source de fluide de conditionnement sous pression.

2. Système de conditionnement d'air suivant la revendication 1, comprenant un deuxième échangeur de chaleur (16) qui comporte un primaire dans le conduit d'air et un secondaire raccordé à une source (46) d'air dynamique.

3. Système de conditionnement d'air suivant l'une des revendications précédentes, comprenant un séparateur d'eau (20) placé à l'aval du primaire (32) de l'échangeur de chaleur et conduisant à une buse de décharge (60) placée dans le conduit d'évacuation (54).

4. Système de conditionnement d'air suivant la revendication 3, dans lequel la turbine est prévue pour travailler de manière à détendre l'air venant du primaire (32) du premier échangeur de chaleur (18) sensiblement adiabatiquement, d'une pression sensiblement égale à celle de la source (24) d'air à une pression sensiblement égale à celle de l'espace clos (14).

5. Système suivant la revendication 3 ou la revendication 4, dans lequel la turbine (22) est prévue pour fonctionner de manière à détendre l'air à une température inférieure au point de congélation.

6. Avion comportant une cabine équipée d'un système de conditionnement d'air suivant l'une quelconque des revendications précédentes.

Fig-1

0 035 909

_Fig-2_

_Fig-3_

_Fig-4_

2